(19) Europäisches Patentamt
European Patent Office
Office européen des brevets

(11) EP 2 720 440 A1

(12) EUROPEAN PATENT APPLICATION
published in accordance with Art. 153(4) EPC

(43) Date of publication:
16.04.2014 Bulletin 2014/16

(51) Int Cl.:
H04M 1/00 (2006.01)     G06F 3/041 (2006.01)
G06F 3/044 (2006.01)

(21) Application number: 12796561.4

(22) Date of filing: 22.03.2012

(86) International application number:
PCT/JP2012/057264

(87) International publication number:
WO 2012/169254 (13.12.2012 Gazette 2012/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.06.2011 JP 2011127187

(71) Applicant: NEC CASIO Mobile Communications,
Ltd.
Kawasaki-shi, Kanagawa 211-8666 (JP)

(72) Inventor: MATSUMOTO, Hiroyuki
Kawasaki-shi
Kanagawa 211-8666 (JP)

(74) Representative: Vossius & Partner
Siebertstrasse 4
81675 München (DE)

(54) COMMUNICATION DEVICE, INPUT CONTROL METHOD AND RECORDING MEDIUM

(57) A communication device includes: communication means that performs communication; an input means that receives input by detecting the proximity or contact of an object; and a control unit that sets, in the input area of the input means, a first area in which input related to control of the communication means is received, and a second area that differs from the first area, and that controls the operation of the input means based an object's proximity to or contact with the second area.

Fig.1

## Description

### Technical Field

The present invention relates to a communication device, an input control method, and a recording medium, and for example, relates to a communication device equipped with a touch panel, an input control method, and a recording medium.

### Background Art

Patent Document 1 describes a portable telephone that, to prevent improper operation of a touch panel that is caused by contact of a touch panel with the user's cheek or ear during conversation, detects the approach of the user's ear or cheek to the touch panel by means of a dedicated proximity sensor and turns OFF the touch panel according to the detection result of the dedicated proximity sensor.

### Literature of the Prior Art

#### *Patent Documents*

Patent Document 1: JP2011-061316A

### Summary of the Invention

#### Problem to be Solved by the Invention

The portable telephone described in Patent Document 1 includes a dedicated proximity sensor which leads to the problems of the large number of parts and attendant increase in costs.
It is an object of the present invention to provide a communication device, an input control method, and a program that can solve the above-described problem.

### Means for Solving the Problem

A communication device according to the present invention includes:

communication means that performs communication;
input means that receives input by detecting proximity to or contact with an object; and control means that sets, in an input area of the input means, a first area in which input is received relating to control of the communication means and a second area that differs from the first area and that controls an operation of the input means based on the proximity to or contact with an object in the second area.

An input control method according to the present invention is an input control method in a communication device that includes communication means that performs communication and includes:

receiving input by detecting proximity to or contact with an object; and
setting, in an input area in which input is received, a first area in which input relating to control of the communication means is received and a second area that differs from the first area, and controlling reception of the input based on the proximity to or contact with an object in the second area.

A recording medium according to the present invention is a computer readable recording medium on which a program is recorded that causes a computer, which is connected to communication means that performs communication, to execute:

an input procedure for receiving input by detecting proximity to or contact with an object; and
a control procedure of setting, in an input area in which input is received, a first area in which input is received that relates to control of the communication means and a second area that differs from the first area, and controlling the input procedure based on the proximity to or contact with an object in the second area.

## Effect of the Invention

According to the present invention, in a communication device that can prevent improper input during communication, the number of components can be decreased and a reduction in costs can be achieved.

## Brief Description of the Drawings

FIG. 1 is a block diagram showing communication device 1 of an exemplary embodiment of the present invention.
FIG. 2 is a front view of communication device 1.
FIG. 3A is a view for describing a capacitive touch panel;
FIG. 3B is a view for describing a capacitive touch panel.
FIG. 3C is a view for describing a capacitive touch panel.
FIG. 4 is a flow chart for describing the operation of communication device 1.
FIG. 5A is a view for describing the operation of touch panel input unit 14 in a state in which communication input area 14a1 is set and object detection area 14a2 is not set.
FIG. 5B is a view for describing the operation of touch panel input unit 14 in a state in which communication input area 14a1 has been set and object detection area 14a2 has not been set.
FIG. 6A is a view for describing the operation of touch panel input unit 14 in a state in which communication input area 14a1 and object detection area 14a2 have been set.
FIG. 6B is a view for describing the operation of touch panel input unit 14 in a state in which communication input area 14a1 and object detection area 14a2 have been set.
FIG. 7 is a block diagram showing communication device that is made up from communication unit 13, touch panel input unit 14, and control unit 16.

## Mode for Carrying Out the Invention

An exemplary embodiment of the present invention is next described with reference to the accompanying drawings.

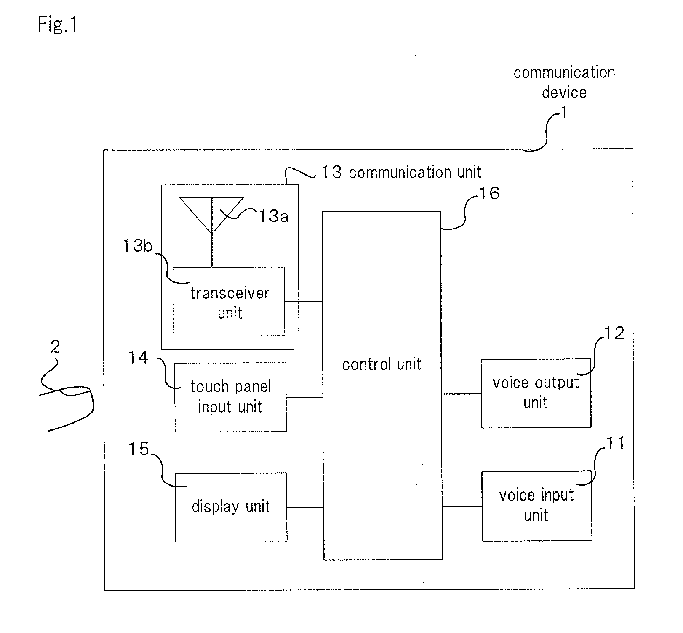

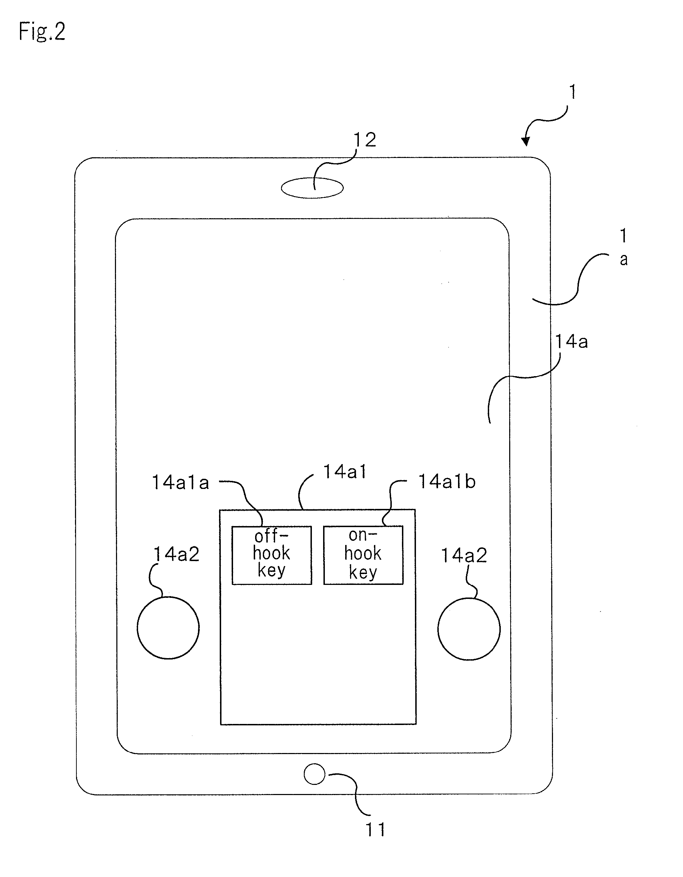

FIG. 1 is a block diagram showing communication device 1 of an exemplary embodiment of the present invention. FIG. 2 is a front view of communication device 1.

Communication device 1 is, for example, a portable telephone device or a smart phone. Communication device 1 is not limited to a portable telephone device or smart phone, but may be, for example, a portable game device with communication capability or a tablet PC (Personal Computer) with communication capability. In the following explanation, a case is described in which communication device 1 is a portable telephone device.

Communication device 1 includes: case 1a, voice input unit 11, voice output unit 12, communication unit 13, touch panel input unit 14, display unit 15, and control unit 16. Communication unit 13 includes antenna 13a and transceiver unit 13b.

Voice input unit 11 receives the voice of the user during conversation.

Voice output unit 12 supplies the received voice according to a received audio signal during conversation.

Communication unit 13 can typically be referred to as communication means.

Communication unit 13 carries out wireless communication with a base station (hereinbelow referred to as "base station") of a portable telephone circuit network (not shown).

Antenna 13a is arranged inside case 1a. Antenna 13a may be capable of extending from case 1a, or may be arranged on the outer surface of case 1a.

Transceiver unit 13b uses antenna 13a to form a wireless circuit with the base station. Transceiver unit 13b modulates a signal that accords with the voice of the user that was received by voice input unit 11 during conversation and transmits from antenna 13a to the base station, or demodulates the signal from the conversation partner that antenna 13a receives from the base station during conversation to generate a received audio signal.

Touch panel input unit 14 can also typically be referred to as input means.

Touch panel input unit 14 has input area 14a. Touch panel input unit 14 receives various kinds of input by detecting the proximity to or contact with object 2 such as a touch pen or finger in input area 14a.

In the present exemplary embodiment, a capacitive touch panel is used as touch panel input unit 14.

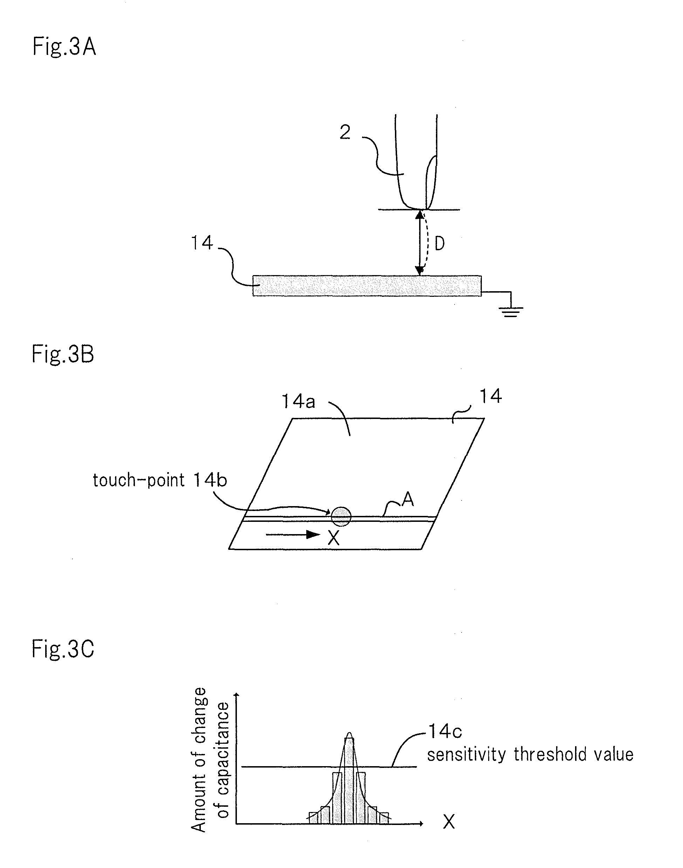

FIGs. 3A-3C are views for describing a capacitive touch panel. FIG. 3A shows the relation between touch panel input unit 14 and finger 2. FIG. 3B shows the point of contact by finger 2 on touch panel input unit 14 (hereinbelow referred to as the "touch-point") 14b. FIG. 3C shows the amount of change in capacitance in area A that contains touch-point 14b. In FIGs. 3B and 3C, the direction of length of area A is indicated as x. The amount of change from a reference value of capacitance is used as the amount of change of capacitance in the present exemplary embodiment. A value such as 0F (Farad) is used as the reference value of capacitance.

In FIGs. 3A-3C, when finger 2 that is an object approaches touch panel input unit 14, or when finger 2 contacts touch panel input unit 14, the conductivity of the human body causes the capacitance between touch panel input unit 14 and finger 2 to increase.

The capacitance that occurs between touch panel input unit 14 and finger 2 changes in inverse proportion to the distance between touch panel input unit 14 and finger 2, as shown in Formula (101) below:

$$C = (\varepsilon \cdot S) / D \hspace{4cm} \text{Formula (101)}$$

In Formula (101), C is the capacitance, $\varepsilon$ is the dielectric constant of each material, S is the surface area of finger 2, and D is the distance between finger 2 and touch panel input unit 14.

Touch panel input unit 14 detects the amount of change in capacitance that occurs when finger 2 comes into proximity to or contact with the touch panel input unit, detects the position at which the amount of change of capacitance surpasses sensitivity threshold value 14c (refer to FIG. 3C) as touch-point 14b, and receives input according to touch-point 14b.

Display unit 15 executes various displays (for example, displays various touch-keys). Display unit 15 is arranged behind touch panel input unit 14.

Control unit 16 can also typically be referred to as control means.

Control unit 16 is equipped with, for example, CPU (Central Processing Unit), ROM (Read Only Memory), RAM (Random Access Memory), a bus-line that connects the CPU, ROM, and RAM together, and an I/O (input/output unit) that connects to the outside.

Control unit 16 controls communication device 1.

For example, control unit 16 sets communication input area 14a1 and object detection area 14a2 in input area 14a (see FIG. 2).

Communication input area 14a1 can also typically be referred to as the first area. Communication input area 14a1 receives input relating to the control of communication unit 13. Input relating to the control of communication unit 13 is, for example, input of telephone numbers, input to off-hook key 14a1a, and input to on-hook key (communication cut-off key) 14a1b.

Input to off-hook key 14a1a can also typically be referred to as input indicating the start of communication. Input to on-hook key 14a1b can also typically be referred to as input indicating the end of communication.

Object detection area 14a2 can also typically be referred to as the second area. Object detection area 14a2 is an area that differs from communication input area 14a1, and for example, detects the proximity or contact of an object such as the user's ear or cheek.

Control unit 16 controls the operation of touch panel input unit 14 based on the proximity or contact of an object in object detection area 14a2.

The operation is next described.

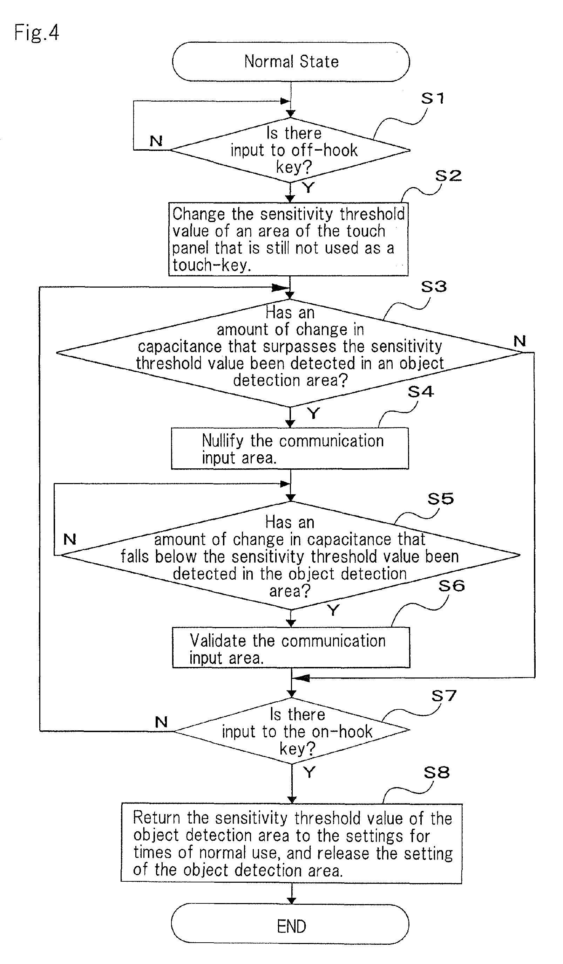

FIG. 4 is a flow chart for describing the operation of communication device 1.

Control unit 16 determines whether touch panel input unit 14 has received input to off-hook key 14a1a in a state in which communication input area 14a1 has been set and a state in which object detection area 14a2 has not been set in touch panel input unit 14 (Step S1). Control unit 16 repeats Step S1 until touch panel input unit 14 receives input to off-hook key 14a1a.

In this situation, when the user touches off-hook key 14a1a in communication input area 14a1 to respond to an incoming call to communication device 1 or to originate a call, touch panel input unit 14 receives the input to off-hook key 14a1a.

When touch panel input unit 14 receives input to off-hook key 14a1a, control unit 16 starts portable telephone communication that uses communication unit 13, and further, sets object detection area 14a2 in an area of input area 14a in which communication input area 14a1, in which touch keys such as off-hook key 14a1a and on-hook key 14a1b have been provided, has not been set. Control unit 16 then makes the sensitivity threshold value of object detection area 14a2 (hereinbelow referred to as "sensitivity threshold value 14c2") lower than the sensitivity threshold value of communication input area 14a1 (hereinbelow referred to as "sensitivity threshold value 14c1") (Step S2). As a result, the sensitivity of object detection area 14a2 is higher than the sensitivity of communication input area 14a1. In addition, the number of object detection areas 14a2 may be more than one.

Control unit 16 next determines whether the amount of change in capacitance in any one of object detection areas 14a2 surpasses sensitivity threshold value 14c2 (Step S3).

When the user places communication device 1 close to his or her ear or cheek for conversation in this state, the amount of change in capacitance in at least one of object detection areas 14a2 will surpass sensitivity threshold value 14c2.

When the amount of change of capacitance in object detection area 14a2 surpasses sensitivity threshold value 14c2, control unit 16 nullifies reception of input in communication input area 14a1 in order to nullify communication input area 14a1 (Step S4).

Control unit 16 next determines whether the amount of change of capacitance in object detection area 14a2 has fallen below sensitivity threshold value 14c2 (Step S5).

When the user removes communication device 1 from his or her ear or cheek for the purpose of an operation to end the conversation or some other operation in this state, the amount of change of capacitance in object detection area 14a2 falls below sensitivity threshold value 14c2.

When the amount of change of capacitance at object detection area 14a2 falls below sensitivity threshold value 14c2, control unit 16 validates the reception of input in communication input area 14a1 in order to validate communication input area 14a (Step S6). As a result, on-hook key 14a1b and other numerical keys (not shown) become valid, and the operation of ending a call or other operations become possible.

Control unit 16 next judges whether touch panel input unit 14 has received input to on-hook key 14a1b (Step S7). When touch panel input unit 14 does not receive input to on-hook key 14a1b, control unit 16 returns to the process of Step S3.

When the amount of change in capacitance in object detection area 14a2 does not surpass sensitivity threshold value 14c2 in Step S3, control unit 16 proceeds to the process of Step S7.

When the user performs an operation for ending a call in Step S7, i.e., when the user touches on-hook key 14a1b, control unit 16 ends the portable telephone communication that uses communication unit 13, and further, makes sensitivity threshold value 14c2 of object detection area 14a2 equal to sensitivity threshold value 14c1 of communication input area 14a1 and releases the settings of object detection area 14a2 (Step S8).

The operation of detecting an object (ear or cheek) in object detection area 14a2 is next described.

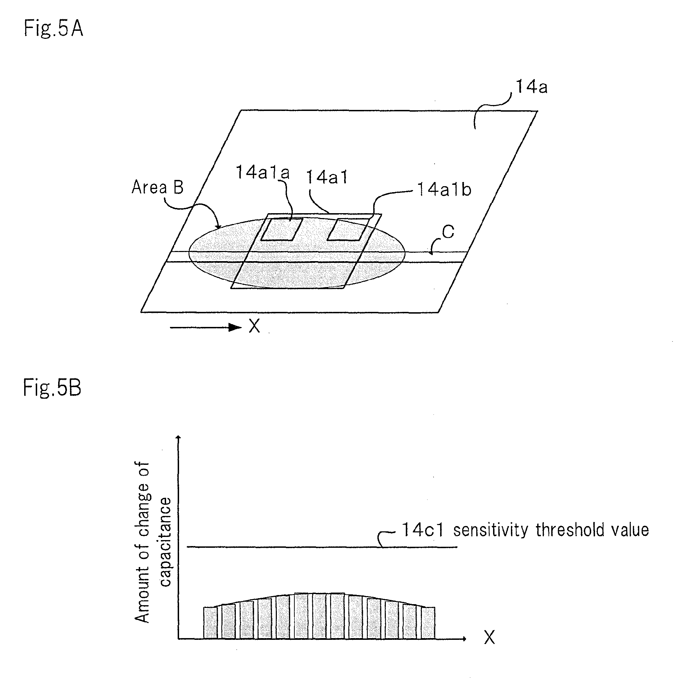

FIG. 5A shows area B in which the proximity of an ear or cheek results in a change in capacitance in a state in which communication input area 14a1 has been set and in a state in which object detection area 14a2 has not been set in input area 14a.

FIG. 5B shows the amount of change of the capacitance of area C and sensitivity threshold value 14c1 in the state shown in FIG. 5A.

In this case, the amount of change of capacitance will not have surpassed sensitivity threshold value 14c1, and the proximity of an ear or cheek will therefore not be detected.

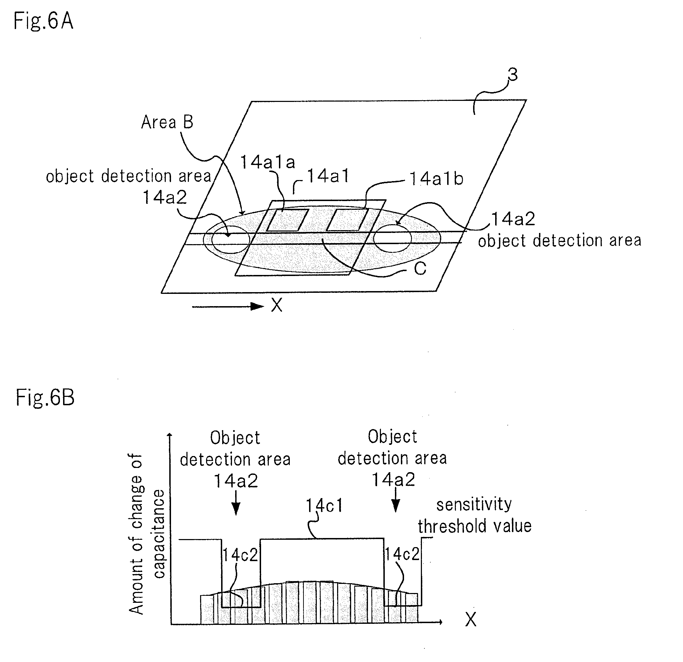

FIG. 6A shows area B in which the proximity of an ear or cheek results in a change in the capacitance in a state in which communication input area 14a1 and a plurality of (two) object detection areas 14a2 have been set in input area 14a.

FIG. 6B shows the amount of change of capacitance of area C and sensitivity threshold values 14c1 and 14c2 in the state shown in FIG. 6A.

In this case, the amount of change of capacitance in object detection area 14a2 surpasses sensitivity threshold value 14c2, enabling the detection of the proximity of an ear or cheek.

The effect of the present exemplary embodiment is next described.

According to the present exemplary embodiment, communication unit 13 performs communication. Touch panel input unit 14 receives input by detecting the proximity or contact of an object. Control unit 16 sets, in input area 14a of touch panel input unit 14, communication input area 14a that receives input relating to the control of communication unit 13 and object detection area 14a2 that differs from communication input area 14a, and controls the operation of touch panel input unit 14 based on the proximity or contact of an object in object detection area 14a2.

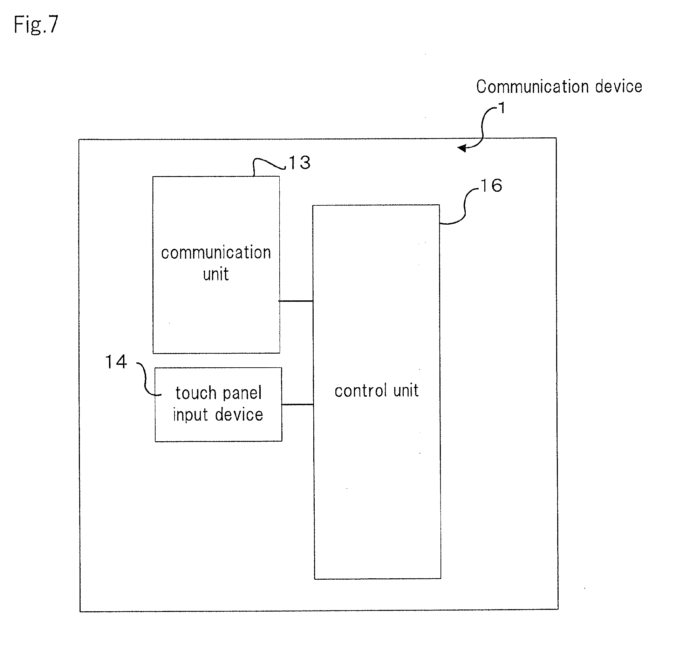

As a result, a portion of input area 14a of touch panel input unit 14 can be used as an object detection unit (object detection area 14a2) for controlling the operation of touch panel input unit 14. Accordingly, a dedicated detection unit for controlling the operation of touch panel input unit 14 need not be provided, and the number of components can therefore be decreased and costs accordingly reduced. In addition, this effect can also be exhibited in a communication device that is made up from communication unit 13, touch panel input unit 14, and control unit 16. FIG. 7 is a block diagram showing a communication device that is made up from communication unit 13, touch panel input unit 14, and control unit 16.

In the present exemplary embodiment, control unit 16 nullifies the reception of input in communication input area 14a according to the proximity or contact of an object in object detection area 14a2.

In this case, improper operations of touch panel input unit 14 can be decreased while decreasing the number of components.

In addition, the sensitivity of object detection area 14a2 in the present exemplary embodiment can be made higher than that of communication input area 14a.

In this case, the timing of detecting the proximity or contact of an ear or cheek not intended by the user in object detection area 14a2 can be made earlier than the timing of detection of the proximity or contact of an ear or cheek not intended by the user in communication input area 14a. As a result, proximity or contact of an ear or cheek not intended by the user can be detected before improper input is carried out in communication input area 14a, the operation of touch panel input unit 14 at this timing can be controlled, and, for example, improper input in communication input area 14a can be prevented.

In the present exemplary embodiment, in a state in which communication input area 14a has been set but in which object detection area 14a2 has not been set, control unit 16 sets object detection area 14a2 when touch panel input unit 14 has received input in communication input area 14a indicating the start of communication.

In this case, object detection area 14a2 can be set when object detection area 14a2 has become necessary.

In the present exemplary embodiment, moreover, in the state in which communication input area 14a and object detection area 14a2 have been set, control unit 16 releases the setting of object detection area 14a2 when touch panel input unit 14 has received input in communication input area 14a indicating that communication is to be ended.

In this case, the setting of object detection area 14a2 can be released when object detection area 14a2 becomes unnecessary.

Still further, in the present exemplary embodiment, control unit 16 sets a plurality of object detection areas 14a2 and controls the operation of touch panel input unit 14 based on proximity to or contact with any of the plurality of object detection areas 14a2.

In this case, proximity or contact of an object can be detected at a plurality of points, whereby missed detection of the proximity or contact of an object can be decreased, and the detection accuracy of the proximity or contact of an object can be increased.

The portable telephone of Patent Document 1 has, as a dedicated proximity sensor for detecting the approach of an ear or cheek, a proximity sensor that includes a transmission unit that projects infrared rays and a reception detection unit that receives infrared rays that are reflected by, for example, the human body to detect the proximity of the human body. As a result, the provision of a window for projecting the infrared rays was required in the portable telephone. This window therefore imposed constraints on the design of the portable telephone.

In the present exemplary embodiment, the role of the dedicated proximity sensor described in Patent Document 1 is realized by touch panel input unit 14, whereby the need for providing a window for projecting infrared rays is eliminated, and constraints on the design can be eased.

In the above-described exemplary embodiment, touch panel input unit 14 is not limited to a capacitive touch panel and can be changed as appropriate. For example, an infrared touch panel or a resistive touch panel may be used as touch panel input unit 14.

In addition, when control unit 16 has nullified the reception of input in communication input area 14a in the above-described exemplary embodiment, a display indicating that reception of input in communication input area 14a has been nullified (for example, a display reading "The touch panel is currently disabled") may be implemented on display unit 15.

Communication device 1 may be realized by a computer that is connected to communication unit 13. In this case, the computer reads and executes a program that has been recorded on a recording medium such as a CD-ROM (Compact Disk Read Only Memory) that can be read by a computer in order to function as voice input unit 11, voice output unit 12, touch panel input unit 14, display unit 15, and control unit 16. The recording medium is not limited to a CD-ROM and can be changed as appropriate.

Although the invention of the present application has been described with reference to an exemplary embodiment, the invention of the present application is not limited to the above-described exemplary embodiment. The configuration and details of the invention of the present application are open to various modifications within the scope of the invention of the present application that will be clear to one of ordinary skill in the art.

This application claims the benefits of priority based on Japanese Patent Application No. 2011-127187 for which application was submitted on June 7, 2011 and incorporates by citation all of the disclosures of that application.

**Explanation of Reference Numbers**

| | |
|---|---|
| 1 | communication device |
| 1a | case |
| 11 | voice input unit |
| 12 | voice output unit |
| 13 | communication unit |
| 13a | antenna |
| 13b | transceiver unit |

| 14 | touch panel input unit |
|---|---|
| 14a | input area |
| 14a1 | communication input area |
| 14a2 | object detection area |
| 15 | display unit |
| 16 | control unit |

**Claims**

1.  A communication device comprising:

    communication means that performs communication;
    input means that receives input by detecting proximity to or contact of an object; and
    control means that sets, in an input area of said input means, a first area in which input relating to control of said communication means is received and a second area that differs from said first area, and that controls an operation of said input means based on an object's proximity to or contact with said second area.

2.  The communication device as set forth in claim 1, wherein said control means nullifies reception of input in said first area according to the object's proximity to or contact with said second area.

3.  The communication device as set forth in claim 1 or 2, wherein sensitivity of said second area is higher than sensitivity of said first area.

4.  The communication device as set forth in any one of claims 1 to 3, wherein said control means sets said second area when said input means has received input in said first area indicating start of communication in a state in which said first area has been set and in a state in which said second area has not been set.

5.  The communication device as set forth in any one of claims 1 to 4, wherein said control means releases the setting of said second area when said input means has received input in said first area indicating that communication is ended in a state in which said first area and said second area have been set.

6.  The communication device as set forth in any one of claims 1 to 5, wherein said control means sets a plurality of said second areas and controls operations of said input means based on an object's proximity to or contact with any of the plurality of second areas.

7.  An input control method in a communication device that includes communication means that performs communication, comprising:

    receiving input by detecting proximity to or contact of an object; and
    setting, in an input area in which input is received, a first area in which input relating to control of said communication means is received and a second area that differs from said first area, and controlling reception of said input based on an object's proximity to or contact with said second area.

8.  A computer readable recording medium on which a program is recorded that causes a computer, which is connected to communication means that performs communication, to execute:

    an input procedure for receiving input by detecting proximity to or contact of an object; and
    a control procedure of setting, in an input area in which input is received, a first area in which input that relates to control of said communication means is received and a second area that differs from said first area, and controlling said input procedure based on an object's proximity to or contact with said second area.

Fig.1

communication
device
1

13 communication unit

16

13a

13b

transceiver
unit

2

control unit

12

voice output
unit

14

touch panel
input unit

15

display unit

11

voice input
unit

Fig.2

14a1a     14a1     14a1b

| off-hook key | on-hook key |
|---|---|

14a2        14a2

Fig.3A

2

14

D

Fig.3B

14a

14

touch-point 14b

A

X

Fig.3C

Amount of change
of capacitance

14c
sensitivity threshold value

X

Fig.4

```
                    ┌─────────────────────────┐
                    │      Normal State       │
                    └─────────────────────────┘
                                 │
                                 ▼
                          ╱──────────────╲              S1
               N    ╱──────              ──────╲
             ┌─────◄        Is there                ╲
             │     ╲    input to off-hook           ╱
             │      ╲──────     key?          ──────╱
             │          ╲──────────────╱
             │                 │ Y
             │                 ▼                        S2
             │   ┌─────────────────────────────┐
             │   │ Change the sensitivity      │
             │   │ threshold value of an area  │
             │   │ of the touch panel that is  │
             │   │ still not used as a         │
             │   │ touch-key.                  │
             │   └─────────────────────────────┘
             │                 │
             │                 ▼
             │          ╱──────────────╲              S3
             │    ╱──────   Has an       ──────╲
             │   ╱   amount of change in          ╲      N
             │  ◄  capacitance that surpasses the  ►────┐
             │   ╲  sensitivity threshold value   ╱     │
             │    ╲ been detected in an object   ╱      │
             │     ╲──── detection area?  ──────╱       │
             │          ╲──────────────╱                │
             │                 │ Y                       │
             │                 ▼                   S4    │
             │   ┌─────────────────────────────┐        │
             │   │  Nullify the communication   │        │
             │   │  input area.                 │        │
             │   └─────────────────────────────┘        │
             │                 │                         │
             │                 ▼                         │
             │          ╱──────────────╲          S5     │
             │    ╱──────   Has an       ──────╲         │
             │   ╱  amount of change in          ╲   N   │
             │  ◄ capacitance that falls below    ►──┐   │
             │   ╲ the sensitivity threshold     ╱   │   │
             │    ╲ value been detected in the  ╱    │   │
             │     ╲── object detection area? ─╱     │   │
             │          ╲──────────────╱             │   │
             │                 │ Y              S6    │   │
             │   ┌─────────────────────────────┐     │   │
             │   │  Validate the communication  │     │   │
             │   │  input area.                 │     │   │
             │   └─────────────────────────────┘     │   │
             │                 │◄────────────────────┘   │
             │                 │◄────────────────────────┘
             │                 ▼
             │          ╱──────────────╲              S7
             │    ╱──────              ──────╲
             │ N ╱       Is there              ╲
             └──◄    input to the on-hook      ╱
                ╲         key?           ──────╱
                 ╲──────────────────────╱
                          │ Y                          S8
                          ▼
          ┌───────────────────────────────────────┐
          │ Return the sensitivity threshold value │
          │ of the object detection area to the    │
          │ settings for times of normal use, and  │
          │ release the setting of the object      │
          │ detection area.                        │
          └───────────────────────────────────────┘
                          │
                          ▼
                   ┌──────────────┐
                   │     END      │
                   └──────────────┘
```

Fig.5A

Fig.5B

Fig.6A

Fig.6B

Fig.7

Communication device
1

communication unit — 13

16

control unit

touch panel input device — 14

**INTERNATIONAL SEARCH REPORT**

| International application No. |
| --- |
| PCT/JP2012/057264 |

A. CLASSIFICATION OF SUBJECT MATTER
*H04M1/00*(2006.01)i, *G06F3/041*(2006.01)i, *G06F3/044*(2006.01)i

According to International Patent Classification (IPC) or to both national classification and IPC

B. FIELDS SEARCHED

Minimum documentation searched (classification system followed by classification symbols)
H04M1/00, G06F3/041, G06F3/044

Documentation searched other than minimum documentation to the extent that such documents are included in the fields searched
Jitsuyo Shinan Koho            1922–1996   Jitsuyo Shinan Toroku Koho   1996–2012
Kokai Jitsuyo Shinan Koho     1971–2012   Toroku Jitsuyo Shinan Koho   1994–2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2009-153072 A  (Sony Corp.),<br>09 July 2009 (09.07.2009),<br>paragraphs [0034], [0050] to [0061], [0089],<br>[0095], [0158] to [0159], [0255] to [0267]; fig.<br>4, 15, 18<br>& US 2009/0160802 A1 | 1,2,4-8<br>3 |
| Y | JP 2011-061316 A  (Fujitsu Toshiba Mobile<br>Communications Ltd.),<br>24 March 2011 (24.03.2011),<br>claim 1; paragraphs [0026], [0043] to [0044]<br>(Family: none) | 3 |
| A | JP 2010-257012 A  (Panasonic Corp.),<br>11 November 2010 (11.11.2010),<br>claim 1<br>(Family: none) | 3 |

☒  Further documents are listed in the continuation of Box C.        ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 June, 2012 (18.06.12) | 26 June, 2012 (26.06.12) |

| Name and mailing address of the ISA/<br>Japanese Patent Office | Authorized officer |
| --- | --- |
| Facsimile No. | Telephone No. |

Form PCT/ISA/210 (second sheet) (July 2009)

EP 2 720 440 A1

**INTERNATIONAL SEARCH REPORT**

International application No.

PCT/JP2012/057264

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-013478 A  (International Business Machines Corp.), 14 January 2000 (14.01.2000), paragraphs [0030] to [0034], [0049] (Family: none) | 1-8 |
| A | JP 2002-135369 A  (NEC Yonezawa, Ltd.), 10 May 2002 (10.05.2002), claim 2 (Family: none) | 1-8 |

Form PCT/ISA/210 (continuation of second sheet) (July 2009)

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011061316 A

- JP 2011127187 A